# EUROPÄISCHE PATENTANMELDUNG

(11) **EP 1 083 761 A2**
(43) Veröffentlichungstag der Anmeldung: **14.03.2001**
(21) Anmeldenummer: 00119141.0
(22) Anmeldetag: 04.09.2000
(51) Int. Cl.: H04Q 7/24, H04Q 7/38, H04Q 3/00

(54) **Verfahren zur Änderung von Servicedaten**

(30) Priorität: 09.09.1999 DE 19943144
(71) Anmelder: SIEMENS AKTIENGESELLSCHAFT, 80333 München (DE)
(72) Erfinder: Leitgeb, Manfred, 2440 Gramatneusiedl (AU); Swetina, Jörg, Dr., 1060 Wien (AU)

(57) **Zusammenfassung**

Die Änderung von Servicedaten für Teilnehmer eines Telekommunikationsnetzes (MFN) erfolgt mittels an den zugeordneten Teilnehmerregisterknoten (HLR) gesendeten Nachrichten eines funktionalen Protokolls, z.B. des MAP-Protokolls. Ein Befehl eines Benutzers (TNA) zur Änderung von Servicedaten eines Teilnehmers (TNB) wird als Treibernachricht (hcd) eines z.B. Keypad-Protokolls an einen Dienstesteuerknoten (SCP) gesendet. Dieser sendet eine Nachricht (rss) des funktionalen Protokolls mit Befehlsinformation zur Änderung der Servicedaten an den Teilnehmerregisterknoten (HLR).

## Beschreibung

Die Erfindung betrifft ein Verfahren zum Ändern von Servicedaten, welche in einem oder mehreren Teilnehmerregisterknoten eines Telekommunikationsnetzes eingerichtet sind und subskriptionsbezogene Daten betreffend Teilnehmer des Netzes enthalten und welche mittels zumindest einer an den bzw. einen der Teilnehmerregisterknoten gesendeten Nachricht eines funktionalen Protokolls veränderbar sind.

Telekommunikationsnetze, insbesondere Telefonnetze, sind als Festnetze oder Mobilfunknetze ausgebildet und weisen untereinander vernetzte Vermittlungseinrichtungen und andere Netzknoten auf, welche dem Aufbau und Erhalt von Gesprächsverbindungen zwischen den Teilnehmern eines Netzes und der Steuerung und Verwaltung dieser Funktionen sowie im Netz realisierter Zusatzdienste dienen. In Mobilfunknetzen sind an die Vermittlungseinrichtungen jeweils Basisstationen angeschlossen, mit deren Hilfe über eine Luftschnittstelle Telekommunikationsendgeräte anschließbar sind. Diese Endgeräte ermöglichen einem Teilnehmer eines Mobilnetzes den Netzzugang. Die Vermittlungseinrichtungen sind darüber hinaus auch für den Übergang zu weiteren Netzen, z.B. einem Datenübertragungsnetz oder einem Festnetz, eingerichtet.

Ein Beispiel für ein Mobilfunknetz ist das bekannte GSM-Netz ('Global System for Mobile communications'). Aus dem GSM-Netz ist das Prinzip bekannt, innerhalb eines Mobilnetzes in den Netzknoten Speichereinheiten, in denen jeweils teilnehmerspezifische Daten zu den netzeigenen Diensten gespeichert sind, zu realisieren. Eine dieser Speichereinheiten stellt das sogenannte Heimatregister (HLR, 'Home Location Register') dar, das sich in der Regel an einem fest definierten Ort befindet und in dem die Subskriptionsdaten des Teilnehmers gespeichert sind, welche die Registrierung des Teilnehmers sowie die von ihm subskribierten intelligenten Dienste und die diesen zugeordneten Dienstmerkmale betreffen. Gegenüber dem Mobilnetz identifiziert sich der Teilnehmer mittels einer spezifischen SIM-Kennung ('Subscriber Identity Module'), welcher beispielsweise in seinem Mobilgerät oder in einer SIM-Karte, die dem gerade genutzten Endgerät eingesteckt ist, gespeichert ist.

Die Signalisierung zwischen den Netzknoten erfolgt mit Hilfe von für diesen Zweck vorgesehenen funktionalen Protokolle, wie z.B. - in Abhängigkeit von dem betrachteten Fest- bzw. Mobilnetz - dem INAP-Protokoll ('Intelligent Network Application Part'), dem CAP-Protokoll ('CAMEL Application Part') oder dem MAP-Protokoll ('Mobile Application Part') gemäß den bekannten GSM-Normen.

In vielen Telekommunikationsnetzen sind neben den Grunddiensten, wie z.B. dem Telefon- und Facsimiledienst eines Telefonnetzes, weitere Dienste eingerichtet, die im folgenden als Zusatzdienste ('supplementary service') bezeichnet werden. Die Zusatzdienste können von einem Teilnehmer des Netzes angesprochen werden können, insoweit er diese subskribiert hat. Zusatzdienste können unter anderem ergänzende Dienste zu den Grunddiensten sein, z.B. eine Anrufumleitung, verwaltungsorientierte Dienste, z.B. ein Abfrage der aufgelaufenen Gesprächsgebühren eines Teilnehmers, oder auf die Grunddienste aufbauende Anwendungsdienste sein, z.B. ein Bankbuchungsdienst. Für die Verwaltung und Durchführung der Dienste ist in einem Intelligenten Netz oft ein eigener Netzknoten vorgesehen, welcher als Dienstesteuerstation oder SCP ('Service Control Point') oder, insbesondere im sogenannten CAMEL-Standard für GSM-Netze, als CSE ('CAMEL Service Environment', bezeichnet wird. Im allgemeinen ist die Dienstesteuerstation von den Vermittlungseinrichtungen des Intelligenten Netzes verschieden.

Bestimmte dienstbezogene Daten können von dem betreffenden Teilnehmer selbst geändert werden. Dies trifft insbesondere für die Daten betreffend die von dem Teilnehmer subskribierten Zusatzdienste zu. Diese werden ja von dem Teilnehmer im Zuge des Aktivierens/Deaktivierens eines Zusatzdienstes geändert, z.B. bei dem Einrichten einer Anrufumleitung jene Servicedaten, welche das Vorhandensein einer Anrufumleitung sowie die zugehörende Zieladresse angeben.

Die Änderung der Servicedaten wird von dem Teilnehmer mittels eines diesbezüglichen Nachrichtenaustausches in dem Telekommunikationsnetz zwischen dem Teilnehmer über dessen Endgerät und dem Telekommunikationsnetz durchgeführt, wobei die Nachrichten in dem Netz letztlich an das dem Teilnehmer zugeordnete Heimatregister weitergeleitet und dort verarbeitet werden.

Der Nachrichtenaustausch bei der Änderung der Subskriptionsdaten erfolgt mit Hilfe eigener Benutzer-Dienst-Signalisierungen. Bekannt ist beispielsweise die Verwendung einer DTMF-Schnittstelle (Doppelton-Multifrequenz-Verfahren), bei der jedoch lediglich Ziffern und einige wenige Sonderzeichen übertragen werden können. In einem GSM-Netz kann z.B. der Dienst des USSD ('Unstructured Supplementary Service Data') genutzt werden. Hierbei handelt es sich um eine spezielle Signalisierung, deren Initiierung in Phase 2 des USSD Dienstes in beiden Richtungen zwischen Endgerät und Netzdienst erfolgen kann. Ein weiteres Beispiel ist die Nutzung von Nachrichtenelementen des INAP-Protokolls ('Intelligent Network Application Part'). Dieses Protokoll wurde ursprünglich für die netzinterne Kommunikation zwischen Vermittlungsstellen und einer Dienstesteuerstation entworfen, kann jedoch auch für die Benutzer-Dienst-Signalisierung eingesetzt werden. Die verschiedenen Signalisierungsmöglichkeiten sind grundsätzlich miteinander kombinierbar.

Es ist für einen Teilnehmer nicht ohne weiteres möglich, die zu seinem Teilnehmeranschluss gehörenden Servicedaten von einem fremden Anschluss, d.h. einem anderen Endgerät bzw. einem Endgerät mit einer fremden SIM-Kennung, aus zu ändern. Das Einrichten einer derartigen unkomplizierten Möglichkeit, die auch eine netzübergreifende Nachrichtengebung gestatten müsste, wurde bisher unterlassen, da für diesen Zweck Änderungen an der Programmierung der Heimatregister für notwendig gehalten wurden und diese einen insgesamt nicht akzeptablen Aufwand seitens der Netzbetreiber mit sich gebracht hätten.

Es ist daher Aufgabe der Erfindung, einen Weg aufzuzeigen, wie die Änderung von Servicedaten insbesondere für Zusatzdienste von einem fremden Anschluss durchgeführt werden kann, ohne dass hierfür in die Programmierung oder Hardware des zuständigen Heimatregisters eingegriffen werden müsste.

Die gestellte Aufgabe wird von einem Verfahren der eingangs genannten Art gelöst, bei welchem erfindungsgemäß aufgrund eines von einem Benutzer auf einem Endgerät des Netzes eingegebenen spezifischen Befehls
von dem Endgerät eine von dem funktionalen Protokoll unabhängige Treibernachricht mit Identifikationsinformation betreffend einen Teilnehmer des Netzes sowie mit Änderungsinformation hinsichtlich Art und Umfang der Änderung von Servicedaten des Teilnehmers erzeugt und an einen Dienstesteuerknoten des Telekommunikationsnetzes gesendet wird,
von dem Dienstesteuerknoten anhand der Treibernachricht die Identifikationsinformation und die Änderungsinformation ermittelt und aufgrund dieser Informationen zumindest eine dem funktionalen Protokoll entsprechende Protokollnachricht,
welche Befehlsinformation zur Änderung der Servicedaten enthält, erzeugt und an den Teilnehmerregisterknoten bzw. an jenen Teilnehmerregisterknoten, welchem der Teilnehmer zugeordnet ist, gesendet wird,
seitens des Teilnehmerregisterknotens die zumindest eine Protokollnachricht zur Einleitung der darin spezifizierten Änderungen ausgewertet wird.

Durch die Verwendung der von dem Benutzer stammenden, in einem protokollunabhängigen Format abgesetzten Nachricht und die Umsetzung dieser Nachricht in eine Nachricht des funktionalen Protokolls seitens des Dienstesteuerknotens wird die gestellte Aufgabe auf einfache Weise erfüllt. Zugleich erfordert die Realisierung des erfindungsgemäßen Verfahrens keine neuen Netzkomponenten oder Protokolle.

In einer bevorzugten Ausführungsform der Erfindung wird als Identifikationsinformation in der Treibernachricht eine Teilnehmerkennung verwendet, welche den Teilnehmer bzw. dessen Endgerät in dem Netz identifiziert, beispielsweise eine netzübergreifende Teilnehmerrufnummer. Dies gestattet eine zuverlässige Identifikation des Zielteilnehmers unabhängig vom Anschluss oder Aufenthaltsort des Benutzer, insbesondere über Netzgrenzen hinweg.

Günstigerweise erfolgt seitens des Dienstesteuerknotens eine Berechtigungsprüfung in bezug auf die spezifizierten Änderungen. Dies kann insbesondere dadurch erfolgen, dass von dem Dienstesteuerknoten der Treibernachricht eine Authentifizierungskennung entnommen und diese überprüft wird, und nur falls das Ergebnis dieser Überprüfung positiv ist, zumindest eine Protokollnachricht erzeugt wird. Auch kann eine Prüfung der aktiven Berechtigung des Benutzers derart erfolgen, dass von dem Dienstesteuerknoten die Berechtigung des Benutzers zu der in der Treibernachricht angeforderten Änderung überprüft wird, und nur falls das Ergebnis dieser Überprüfung positiv ist, zumindest eine Protokollnachricht erzeugt wird. Weiters kann, sofern dies aus Sicherheitsgründen erforderlich ist, von dem Dienstesteuerknoten die Berechtigung des Benutzers zur Änderung der Servicedaten in einem Berechtigungsdialog mit dem Benutzer überprüft werden. Die genannten Berechtigungsprüfungen können selbstverständlich auch miteinander kombiniert werden, wobei erst bei positivem Ergebnis aller Prüfungen mit dem Erzeugen der Protokollnachricht(en) fortgesetzt wird.

Das erfindungsgemäße Verfahren zur Änderung von Servicedaten eignet sich insbesondere zur Ausführung in einem als Mobilfunknetz, z.B. einem GSM-Netz, ausgebildeten Telekommunikationsnetz, in welchem die Teilnehmerregisterknoten als Heimatregister realisiert sind. Hierbei kann günstigerweise eine USSD-Nachricht als Treibernachricht verwendet werden.

Gleichermaßen kann die Erfindung in einem als Festnetz, insbesondere einem ISDN-Netz, ausgebildeten Telekommunikationsnetz ausgeführt werden.

Günstigerweise wird eine in einem Keypad-Format realisierte Behälternachricht als Treibernachricht verwendet, sodass die Zeichen über ein Tastenfeld ('keypad') einfacher Bauart eines Endgeräts eingebbar sind.

Die Erfindung samt weiterer Vorzüge wird im folgenden anhand eines Ausführungsbeispiels näher erläutert, wobei die beigefügten Zeichnungen herangezogen werden. Diese zeigen, soweit für die Erläuterung der Erfindung von Belang:
- Fig. 1: ein Übersichtsdiagramm eines Mobilfunknetzes und die darin realisierten Komponenten sowie zwei Teilnehmer des Netzes;
- Fig. 2: ein Signalisierungsdiagramm der im Zuge einer Dienstdaten-Änderung nach der Erfindung ausgetauschten Nachrichten;
- Fig. 3: eine Treibernachricht nach der Erfindung.

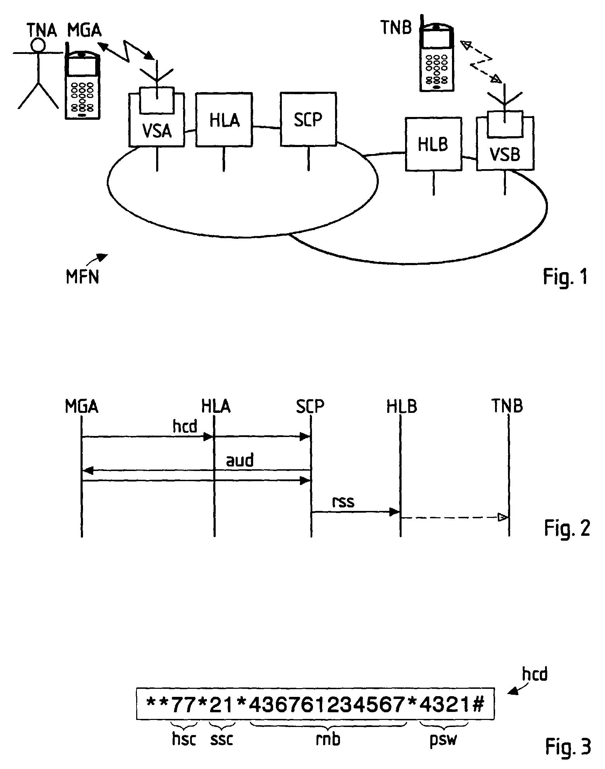

In Fig. 1 ist der Benutzer TNA sowie das Mobil-Endgerät MGA dargestellt, über das der Benutzer Zugang zu dem GSM-Netz MFN hat. Ebenfalls gezeigt ist jene Mobilvermittlung VSA des Mobilnetzes MFN, in deren Einzugsbereich dem Benutzer TNA mit seinem Mobilgerät MGA sich befindet und die ihm deshalb als Besuchervermittlung ('visited mobile switching center', VMSC) zugeordnet ist; des weiteren ist die Luftschnittstelle zwischen dem Mobilgerät MGA und einer Basisstation der Mobilvermittlung VSA symbolisch dargestellt. Wie dem Fachmann wohlbekannt, hält die Mobilvermittlung VSA in ihrem sogenannten Besucherregister einen Eintrag betreffend den als Netzteilnehmer eingebuchten Benutzer TNA und dessen teilnehmerspezifische Daten. Diese erhält es nach bekannter Art von seiten des dem Benutzer TNA zugeordneten Heimatregisters HLA. Entsprechendes gilt für einen zweiten Teilnehmer TNB bzw. dessen Mobil-Endgerät, das in Fig. 1 anstelle des Teilnehmers gezeigt ist, sowie das diesem zugeordnete Heimatregister HLB. Der Teilnehmer TNB kann über eine Besuchervermittlung VSB im Netz MFN eingebucht sein; dies ist freilich für die Erfindung von nebensächlicher Bedeutung. Es ist des weiteren für die Erfindung nicht von Belang, ob die beiden Teilnehmer TNA,TNB tatsächlich verschiedene Personen sind oder es sich beispielsweise bei diesen Anschlüssen um zwei Anschlüsse derselben nutzenden Person handelt.

Für die Durchführung von Diensten, welche den Netzteilnehmern zur Nutzung angeboten werden, ist in dem Netz MFN ein Dienstesteuerknoten SCP eingerichtet. Der Dienstesteuerknoten kann auch als CSE-Knoten nach dem CAMEL-Standard realisiert sein.

Das Mobilfunknetz des betrachteten Ausführungsbeispiel ist ein GSM-Netz gemäß den bereits genannten Standards einschließlich des CAMEL-Standards in Phase 2; jedoch ist die Erfindung nicht auf eine derartige Netze eingeschränkt. Das Mobilfunknetz MFN kann beispielsweise als ein GSM-Netzverbund realisiert sein, in welchem sich die Teilnehmer TNA,TNB zwischen den Netzen, aus denen der Netzverbund gebildet ist, bewegen ("roamen") können; wie in der Fig. 1 beispielhaft angedeutet, können die beiden Teilnehmer sich insbesondere in verschiedenen Netzen des Netzverbunds aufhalten.

Beispielsweise will der Benutzer TNA eine Anrufumlenkung aller für den Teilnehmer TNB ankommenden Anrufe zu dem Mobilgerät MGA bewirken, welches der Benutzer TNA gerade verwendet. Diese Anrufumlenkung erfolgt in dem hier betrachteten GSM-Netz mittels des sogenannten CFU-Services ('Call Forwarding Unconditional'). Der im Zuge des Vorgangs zur Registrierung dieser Anrufumlenkung in dem Mobilfunknetz MFN erfolgende Nachrichtenaustausch ist in dem Signalablaufdiagramm der Fig. 2 dargestellt, in dem die Zeitachse in vertikaler Richtung verläuft; in Fig. 2 sind nur die für das Verständnis wichtigen Signalisierungspunkte als vertikale Linien gezeigt, während insbesondere die Vermittlungen VSA,VSB und die zugehörenden Basisstationen nicht dargestellt sind, da die Signalisierung über sie nach dem Fachmann wohlbekannter Weise erfolgt.

Der Benutzer TNA gibt auf seinem Mobilfunkgerät MGA eine Nachricht ein, welche die Rufnummer, z.B. die MSISDN-Nummer, des Zielteilnehmers TNB sowie Informationen betreffend die gewünschte Änderung der Servicedaten enthält und welche als USSD-Nachricht hcd von dem Mobilgerät MGA an das Netz MFN ausgesendet wird. Der USSD-Befehl hcd dient als Treibernachricht im Sinne der Erfindung. In dem Netz MFN wird der USSD-Befehl hcd nach bekannter Art zu dem Heimatregister HLA, welches dem Mobilgerät MGA zugeordnet ist, und von dort zu dem Dienstesteuerknoten SCP geleitet.

Die Treibernachricht hcd hat beispielsweise die in Fig. 3 gezeigte Form. Darin kennzeichnen die zwei Stern-Symbole *' welche zu Beginn der Nachricht hcd stehen, die Registrierung (Einrichten) eines Zusatzdienstes. Die weiteren Stern-Symbole dienen als Trennzeichen für die Parameter hsc,ssc,rnb,psw der Treibernachricht, und das Gitter-Symbol # schließt die Nachricht ab. Die Treibernachricht ist eine Behälternachricht, worin lediglich Anfang und Ende der Nachricht sowie gegebenenfalls wie hier darin verwendet Trennzeichen einem festen Format unterliegen, während im übrigen der Inhalt der Behälternachricht für die Zwecke der ausgetauschten Information frei wählbar ist - im Gegensatz zu Signalisierungsnachrichten der Signalisierungsprotokolle beispielsweise, in denen Struktur und Inhalt der Nachrichten durch funktionale Protokolle wie das MAP-Protokoll detailliert geregelt sind. Die in der Behälternachricht verwendeten Zeichen gehören günstigerweise einem sogenannten Keypad-Format an, sodass die Zeichen über ein Tastenfeld ('keypad') einfacher Bauart eines Endgeräts eingebbar sind. Ein weiterer Vorteil des Keypad-Formats ist, dass aufgrund ihrer Einfachheit eine transparente Übermittlung dieser Zeichen ohne weiteres gegeben ist. Ein weiterer Vorteil ergibt sich aus dem Umstand, dass von dem Mobilgerät MGA die Treibernachricht hcd als USSD-Befehl in Form einer Transaktionsnachricht ausgesendet wird, wodurch der Übermittlungs- und Signalisierungsaufwand im Vergleich zu einer Gesprächsverbindung deutlich reduziert wird.

Der erste Parameter hsc der Treibernachricht hcd ist ein Servicecode, welcher zum einen dem Heimatregister HLA anzeigt, dass die an diesen gesendete Treibernachricht hcd an den Dienstesteuerknoten SCP weiterzuleiten ist, zum anderen für den Dienstesteuerknoten SCP eine Kennung der Nachricht als Treibernachricht zur Änderung von Dienstdaten nach der Erfindung darstellt. Aufgrund dieser Kennung kann beispielsweise ein eigens hierfür vorgesehener Treiberdienst ('handler') des Dienstesteuerknotens SCP aufgerufen werden, welcher die folgenden, seitens des Dienstesteuerknotens ablaufenden Verfahrensschritte ausführt.

Abfolge, Format und Inhalt der Parameter der Treibernachricht hcd sind im Hinblick auf den im Dienstesteuerknoten SCP eingerichteten Treiberdienst festgelegt. Beispielsweise, vgl. Fig. 3, ist der zweite Parameter ssc der Servicecode des zu registrierenden Zusatzdienstes, in dem hier betrachteten Beispiel ist der Servicecode ssc 21, da dieser Zifferncode den 'Call Forward Unconditional'-Dienst repräsentiert. Der Servicecode ssc stellt in dem Ausführungsbeispiel die Änderungsinformation nach der Erfindung dar; in anderen Fällen kann die Änderungsinformation auch z.B. mehrere Parameter in Abhängigkeit von den durchzuführenden Änderungen und dem/den betroffenen Zusatzdienst(en) umfassen. Es sei an dieser Stelle angemerkt, dass der Begriff "Änderung" unter anderem auch das Hinzufügen oder Löschen von Daten umfasst.

Ein weiterer Parameter rnb der Treibernachricht hcd dient als Identifikationsinformation betreffend den Zielteilnehmer TNB, z.B. in Form seiner Rufnummer, die als MSISDN-Nummer angegeben ist. Die Verwendung der MSISDN-Nummer oder eines entsprechenden Teilnehmerrufnummernformats ist vorteilhaft, da diese als netzübergreifende Teilnehmerkennung eine eindeutige Bezugnahme auf einen Teilnehmer eines Telekommunikationsnetzes gestattet.

Weiters enthält die Nachricht hcd günstigerweise eine Authentifizierungskennung, beispielsweise ein Passwort psw, zur Überprüfung der Berechtigung des Benutzers TNA hinsichtlich der verlangten Änderung der Dienstdaten des Teilnehmer TNB.

Seitens des Dienstesteuerknotens SCP wird die Treibernachricht hcd empfangen und durch den Treiberdienst ausgewertet. Dies geschieht z.B. gemäß den folgenden Schritten:
a) Aus der MSISDN-Nummer rnb des Zielteilnehmers TNB wird die Zieladresse ('destination address') des zuständigen Heimatregisters HLB ermittelt. Dies erfolgt nach bekannter Art mittels der sogenannten 'global title translation' unter Verwendung der Heimatlandkennzahl (CC) und der nationalen Zielkennzahl (NDC), aus denen neben der Teilnehmernummer im engeren Sinne die MSISDN-Nummer besteht und die das Heimatregister HLB dieses Teilnehmers eindeutig bezeichnen.
b) Die Berechtigung des Benutzers TNB zu der in der Treibernachricht angeforderten Änderung der Dienstdaten des Teilnehmers TNB wird von dem Dienstesteuerknoten SCP überprüft. Dies erfolgt im einfachsten Fall dadurch, dass lediglich nachgeprüft wird, ob der Benutzer für die Nutzung des Treiberdienstes subskribiert ist (aktive Berechtigung), und ob sich diese Erlaubnis auf den angegebenen Zielteilnehmer bezieht (passive Berechtigung). Falls die Berechtigung nicht vorliegt, wird der Vorgang, ggf mit einer entsprechenden Meldung an den Benutzer TNA, abgebrochen.
   Sofern ein Passwort verlangt ist, wird das in der Treibernachricht hcd angegebene Passwort pws auf die Übereinstimmung mit einem entsprechenden, auf seiten des Dienstesteuerknotens SCP für die Verwendung des Treiberdienstes durch den Benutzer TNA in Bezug auf den Zielteilnehmer TNB und den gemäß dem Servicecode ssc spezifizierten Dienst, nämlich in diesem Beispiel die Anrufumlenkung, eingetragenen Passwortes überprüft.
   Anstelle oder in Kombination mit den genannten Berechtigungsprüfungen kann die Berechtigung des Benutzers zur Änderung der Servicedaten auch in einem Berechtigungsdialog aud, der von dem Dienstesteuerknoten SCP mit dem Benutzer geführt wird, überprüft werden. Ein derartiger Authentizierungsdialog erfolgt nach dem Fachmann bekannter Art und wird daher hier nicht näher erläutert.
c) Ein MAP-Dialog auf der Grundlage des sogenannten 'MAP Open Service' des MAP-Protokolls, wird mit dem Heimatregister HLB initiiert, dessen Zieladresse in Schritt a) bestimmt wurde. Die für den MAP-Dialog ebenfalls als Zielreferenz ('destination reference') erforderliche IMSI-Nummer des Teilnehmers TNB kann beispielsweise entsprechend dem vom Kurznachrichtendienst ('Short Message Service') angewandten Verfahren mittels eines 'MAP-Send-Routing-Info-For-SM'-Dialogs, in welchem seitens einer Mobilvermittlung Routing-Information aus einem Heimatregister abgefragt wird, ermittelt werden.
d) Im Zuge diese MAP-Dialogs wird eine MAP_REGISTER_SS-Nachricht rss von dem Dienstesteuerknoten SCP an das Heimatregister HLB gesendet. Diese Protokollnachricht wird von dem Treiberdienst anhand der in der Treibernachricht hcd angegebenen Parameter erstellt und hat insbesondere folgende Parameterwerte:
   - Als Dienstcode ('SS-Code') wird der Servicecode des zu registrierenden Zusatzdienstes angegeben, in dem hier betrachteten Beispiel ('Call Forward Unconditional') 21 ; und
   - als Weiterleitadresse ('Forwarded-to Number') wird die als Teilnehmerkennung rnb angegebene MSISDN-Nummer des Teilnehmer TNB genannt.

Dadurch erhält das Heimatregister HLB eine Nachricht rss, die einer Nachricht entspricht, welche von dem Teilnehmer TNB selbst abgesetzt und z.B. über die Besuchervermittlung VSB dem Heimatregister HLB zugeleitet worden wäre. Seitens des Heimatregisters werden somit die Dienstdaten entsprechend der Protokollnachricht rss geändert.

Eine Benachrichtigungsmeldung des Heimatregister HLB an den betroffenen Teilnehmer TNB (in Fig. 2 als unterbrochener Signalpfeil dargestellt) kann, sofern erwünscht, stattfinden.

## Patentansprüche

1. Verfahren zum Ändern von Servicedaten, welche in einem oder mehreren Teilnehmerregisterknoten (HLR) eines Telekommunikationsnetzes (MFN) eingerichtet sind und subskriptionsbezogene Daten betreffend Teilnehmer des Netzes (MFN) enthalten und welche mittels zumindest einer, an den bzw. an einen der Teilnehmerregisterknoten (HLR) gesendeten Nachricht eines funktionalen Protokolls veränderbar sind,
**dadurch gekennzeichnet**,
dass aufgrund eines von einem Benutzer (TNA) auf einem Endgerät (MGA) des Netzes (MFN) eingegebenen spezifischen Befehls von dem Endgerät (MGA) eine von dem funktionalen Protokoll unabhängige Treibernachricht (hcd) mit Identifikationsinformation betreffend einen Teilnehmer (TNB) des Netzes (MFN) sowie mit Änderungsinformation hinsichtlich Art und Umfang der Änderung von Servicedaten des Teilnehmers (TNB) erzeugt und an einen Dienstesteuerknoten (SCP) des Telekommunikationsnetzes (MFN) gesendet wird,
von dem Dienstesteuerknoten (SCP) anhand der Treibernachricht (hcd) die Identifikationsinformation und die Änderungsinformation ermittelt und aufgrund dieser Informationen zumindest eine dem funktionalen Protokoll entsprechende Protokollnachricht (rss), welche Befehlsinformation zur Änderung der Servicedaten enthält, erzeugt und an den Teilnehmerregisterknoten (HLR) bzw. an jenen Teilnehmerregisterknoten, welchem der Teilnehmer (TNB) zugeordnet ist, gesendet wird, und
seitens des Teilnehmerregisterknotens (HLR) die zumindest eine Protokollnachricht (rss) zur Einleitung der darin spezifizierten Änderungen ausgewertet wird.

2. Verfahren nach Anspruch 1,
**dadurch gekennzeichnet,** dass als Identifikationsinformation in der Treibernachricht eine Teilnehmerkennung verwendet wird, welche den Teilnehmer (TNB) bzw. dessen Endgerät (MGB) in dem Netz identifiziert.

3. Verfahren nach Anspruch 1 oder 2,
**dadurch gekennzeichnet,** dass von dem Dienstesteuerknoten (SCP) der Treibernachricht eine Authentifizierungskennung entnommen und diese überprüft wird, und nur falls das Ergebnis dieser Überprüfung positiv ist, zumindest eine Protokollnachricht (rss) erzeugt wird.

4. Verfahren nach einem der Ansprüche 1 bis 3,
**dadurch gekennzeichnet,** dass von dem Dienstesteuerknoten (SCP) die Berechtigung des Benutzers zu der in der Treibernachricht angeforderten Änderung überprüft wird, und nur falls das Ergebnis dieser Überprüfung positiv ist, zumindest eine Protokollnachricht (rss) erzeugt wird.

5. Verfahren nach einem der Ansprüche 1 bis 4,
**dadurch gekennzeichnet,** dass von dem Dienstesteuerknoten (SCP) die Berechtigung des Benutzers zur Änderung der Servicedaten in einem Berechtigungsdialog (aud) mit dem Benutzer (TNA) überprüft wird, und nur falls das Ergebnis dieser Überprüfung positiv ist, zumindest eine Protokollnachricht (rss) erzeugt wird.

6. Verfahren nach einem der Ansprüche 1 bis 5,
**dadurch gekennzeichnet,** dass es in einem als Mobilfunknetz, z.B. einem GSM-Netz, ausgebildeten Telekommunikationsnetz (MFN) ausgeführt wird, in welchem die Teilnehmerregisterknoten (HLR) als Heimatregister realisiert sind.

7. Verfahren nach Anspruch 6,
**dadurch gekennzeichnet,** dass eine USSD-Nachricht als Treibernachricht (hcd) verwendet wird.

8. Verfahren nach einem der Ansprüche 1 bis 5,
**dadurch gekennzeichnet,** dass es in einem als Festnetz, insbesondere einem ISDN-Netz, ausgebildeten Telekommunikationsnetz ausgeführt wird.

9. Verfahren nach einem der Ansprüche 1 bis 8,
**dadurch gekennzeichnet,** dass eine in einem Keypad-Format realisierte Behälternachricht als Treibernachricht (hcd) verwendet wird.
